# FASCICULE DE BREVET EUROPEEN

(11) **EP 1 431 111 B1**
(45) Date de publication et mention de la délivrance du brevet: **11.08.2010**
(21) Numéro de dépôt: 03293248.5
(22) Date de dépôt: 19.12.2003
(51) Int. Cl.: B60N 2/62

(54) **Siège adaptable de véhicule**
Anpassbarer Sitz für Fahrzeuge
Adaptable seat for vehicles

(30) Priorité: 20.12.2002 FR 0216338
(43) Date de publication de la demande: 23.06.2004
(73) Titulaire: RENAULT S.A.S., 92100 Boulogne Billancourt (FR)
(72) Inventeur: Chamouard, François, Xavier, 78960 Voisins Le Bretonneux (FR)

(56) Documents cités:
- DE-A- 4 125 416
- FR-A- 2 734 766
- GB-A- 1 307 749
- GB-A- 2 366 194
- US-A- 3 632 166
- US-A- 4 558 903
- US-A- 4 629 248
- PATENT ABSTRACTS OF JAPAN vol. 2000, no. 09, 13 octobre 2000 (2000-10-13) & JP 2000 175762 A (TAKASHIMAYA NIPPATSU KOGYO CO LTD;NHK SPRING CO LTD), 27 juin 2000 (2000-06-27)
- PATENT ABSTRACTS OF JAPAN vol. 1998, no. 04, 31 mars 1998 (1998-03-31) & JP 09 328029 A (TAKASHIMAYA NIPPATSU KOGYO KK;TOYOTA MOTOR CORP; NHK SPRING CO LTD), 22 décembre 1997 (1997-12-22)

## Description

La présente invention se situe dans le domaine des sièges automobiles.

Plus particulièrement, elle concerne un siège de véhicule comprenant un dossier et une surface d'assise comportant un coussin principal et un coussin complémentaire appelé nez d'assise, qui est situé à l'extrémité avant du coussin principal, et qui est susceptible d'occuper deux positions par rapport au coussin principal, une position dite adulte, dans laquelle la longueur d'assise est maximale, et une position dite enfant, dans laquelle la longueur d'assise est minimale.

Il est connu, pour modifier la longueur d'assise d'un siège de véhicule, de pivoter le nez de l'élément d'assise autour d'un axe horizontal et central du nez. Un tel dispositif est décrit dans le document FR-A-2 734 766 qui montre les caractéristiques du préambule de la revendication 1 et qui décrit et représente un siège comportant plusieurs axes de pivotement, parallèles entre eux, autour desquels le nez d'assise pivote successivement d'une position déterminée à une position suivante, et le nez d'assise ayant une forme générale polygonale dont les côtés successifs sont de longueur croissante. La position desdits axes par rapport aux dits côtés est telle que la surface du nez d'assise, dirigée vers le haut dans chacune des positions, est sensiblement dans le prolongement et à proximité directe de la surface supérieure du coussin principal.

Cette solution permet de faire varier la longueur d'assise d'un siège. Cependant elle n'offre pas la possibilité d'obtenir une longueur d'assise minimale, qui soit suffisamment courte pour pouvoir asseoir correctement un enfant, c'est à dire pour le positionner de telle façon que la partie inférieure de son dos soit en appui sur le dossier. De plus, cette solution comporte un mécanisme de pivotement et de blocage angulaire du nez d'assise relativement coûteux et difficile à mettre en oeuvre.

Pour obvier à ces inconvénients, l'invention propose un siège du type décrit précédemment, caractérisé en ce que la longueur d'assise minimale est égale à la longueur du coussin principal.

Dans un autre mode de réalisation, le nez est monté basculant vers l'avant au moyen d'une charnière souple en tissu située sur la partie inférieure de la face interne du nez et de la face délimitant l'extrémité avant du coussin principal.

Dans un mode de réalisation, le nez est détachable du coussin principal.

Dans une autre variante de réalisation, le nez est un élément gonflable.

Selon un autre aspect de l'invention, la face interne du nez d'assise et la face délimitant l'extrémité avant du coussin sont inclinées vers l'avant.

Selon une autre caractéristique, le nez d'assise est attaché au coussin au moyen d'une fermeture éclair placée le long et au moins un segment du périmètre de la face interne du nez et de la face délimitant l'extrémité avant du coussin.

Selon une autre caractéristique, le nez d'assise est maintenu adjacent au coussin principal, au moyen d'une enveloppe élastique fixée à l'extrémité du coussin dans laquelle le nez est inséré transversalement.

Selon une autre caractéristique, le coussin principal comporte un coffre qui débouche dans la face délimitant l'extrémité avant du coussin.

L'invention sera mieux comprise à la lecture de la description qui va suivre, donnée uniquement à titre d'exemple et faite en se référant aux dessins annexés sur lesquels :
La figure 1 représente schématiquement en perspective un siège selon l'invention sur lequel le nez est en position dite adulte.
La figure 2 est une vue analogue à celle de la figure 1 et illustre un mode de réalisation particulier du siège sur lequel le nez est en position dite enfant.
La figure 3 est une vue analogue à la précédente et illustre un autre mode de réalisation du siège selon l'invention.

Le siège 10 comporte un dossier arrière 11 d'orientation globalement verticale et une assise 12 comportant un coussin principal horizontal 14 et un nez d'assise 16, situé à l'extrémité libre avant du coussin 14. Le nez d'assise 16 est de forme générale proche d'un prisme triangulaire d'orientation transversale et horizontale dont la face latérale supérieure 18 correspond au prolongement de la surface d'assise du coussin 14, car elle est placée à l'avant du coussin 14 principal, de façon à s'étendre sensiblement dans le même plan horizontal que la surface dudit coussin 14.

En position adulte, la face transversale 20 du nez d'assise 16 est en appui sur la face transversale 22 délimitant l'extrémité avant du coussin et, afin de maintenir le nez 16 dans cette position, il est prévu une fermeture éclair 24, placée, au moins, le long du segment commun à la face latérale interne 20 et la face latérale supérieure 18. De préférence la fermeture éclair 24 peut être prolongée latéralement de chaque côté du nez d'assise 16 afin de compléter sa fixation sur le coussin d'assise pour le rendre plus stable et pour éviter tout mouvement latéral.

Le tissu recouvrant le nez d'assise 16 est identique à celui recouvrant le coussin principal 14, de manière à intégrer parfaitement celui-ci, dans le siège 10 en position adulte. Afin de cacher le moyen de fixation du nez 16 sur le coussin 14, par exemple la fermeture éclair 24, et pour un meilleur confort du passager, le coussin principal 14 comporte une languette 26 de protection recouvrant le moyen de fixation, de préférence réalisée dans le même tissu que celui qui recouvre le coussin principal.

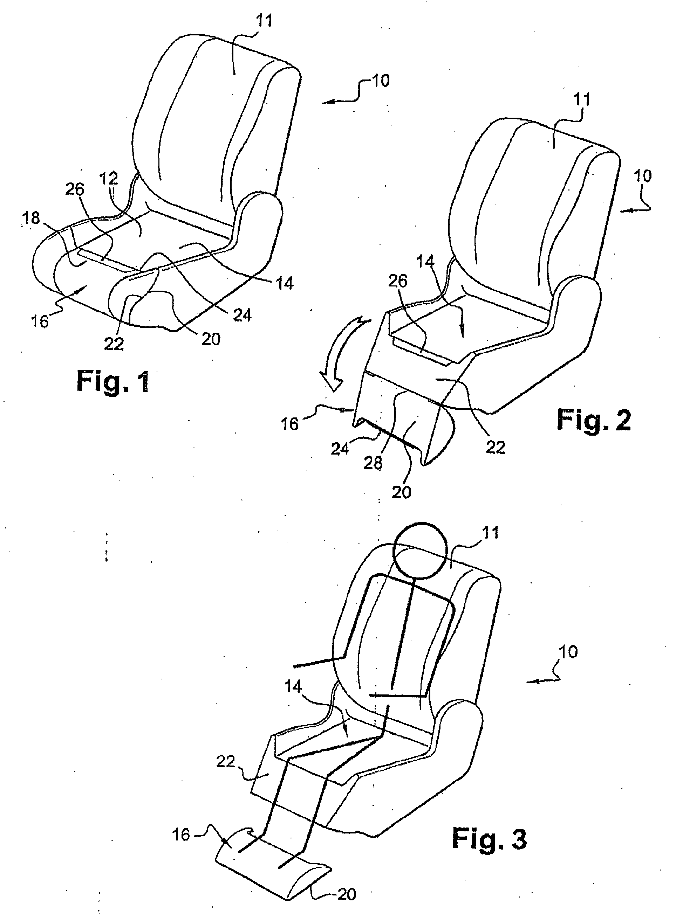

Après avoir détaché la fermeture, on bascule le nez dans la position illustrée à la figure 2, dans laquelle la face 22 délimitant l'extrémité avant du coussin 14 est découverte. Ce nez 16 est maintenu audit coussin principal au moyen d'une charnière 28 souple en tissu située sur la partie inférieure de la face 20 latérale interne du nez 16.

La face 22 délimitant l'extrémité avant du coussin principal est prévue inclinée vers l'avant pour maintenir les jambes de l'enfant, qui ne sont pas suffisamment longues pour prendre appui sur le plancher du véhicule, et entraînent un risque, pour l'enfant, de glisser du siège en cas de choc frontal.

Avantageusement, lorsque le nez 16 est basculé vers l'avant , il peut permettre un accès à un coffre de rangement situé à l'intérieur du coussin principal, et dont l'ouverture débouche dans la face 22 formant l'extrémité du coussin principal.

La position dite enfant est prévue pour qu'un enfant, ou une personne de petite taille, soit correctement assis dans la siège 10. C'est à dire que la longueur de l'assise correspond à peu près à celle allant de la partie inférieure du dos jusqu'au genou. Ainsi les genoux peuvent être pliés à l'extrémité du coussin et la partie inférieure du dos est maintenue entre le coussin 14 principal et le dossier 11.

Dans cette position, l'enfant est en situation de sécurité optimale. En effet les éléments permettant de le protéger, tels que la ceinture de sécurité, un coussin gonflable ou un appui-tête pour enfant, sont prévus agir efficacement lorsque le passager est correctement positionné. Par exemple, la ceinture ne comprimera pas l'abdomen du passager, en cas de choc frontal.

A cet effet une étiquette indiquant comment utiliser le siège 10 en position enfant, et indiquant que les éléments de sécurité ont été homologués lors des tests de sécurité dans cette position, pourra être placée sur la face 22 formant l'extrémité du siège avant.

La figure 3 représente un autre mode de réalisation de l'invention, où le nez 16 d'assise est totalement détachable du coussin principal 14.

Ce nez 16 est un élément complètement détachable du siège 10 et il est maintenu en position, au moyen d'une fermeture éclair 24, comme décrit dans le premier mode de réalisation, montée, au moins, sur la face supérieure 18 du nez 16.

Dans une autre variante, le nez 16 est inséré dans une enveloppe élastique qui, en position enfant, est complètement rétractée sur la face avant formant l'extrémité du coussin 14, et qui, en position adulte se détend au maximum pour entourer et maintenir le nez.

Avantageusement, une gouttière semi-rigide est prévue sur la partie inférieure de la face formant l'extrémité du coussin, afin de stabiliser le nez 16 lorsqu'il est inséré dans l'enveloppe, et pour éviter son glissement vers le bas du coussin 14.

Lorsqu'il est totalement détaché, le nez 16 offre plusieurs variantes d'utilisation. Il peut être utilisé comme un repose pied, tel que représenté à la figure 3, en le posant simplement sur le plancher. Il peut aussi être utilisé comme un accoudoir, en le posant le long du côté du coussin 14 du siège 10. Le nez peut aussi être rangé dans le coffre situé à l'intérieur du coussin principal.

Selon une autre variante de l'invention, le nez 16 est un coussin gonflable, qui en position enfant se plie complètement à plat sous le coussin 14, ou sur la face 22 formant l'extrémité avant.

Dans une autre variante de l'invention, le coussin 14 principal comporte sur sa face inférieure, un évidemment prévu pour placer un système de sécurité volumineux, tel qu'un coussin gonflable métallique.

La présente invention permet d'utiliser le siège véhicule, en tant que siège enfant, sans encombrement d'un siège supplémentaire. De plus la réalisation de cette invention est facile et peu

## Revendications

1. Siège automobile comprenant un dossier et une assise comportant un coussin principal et un coussin complémentaire appelé nez d'assise, qui est situé à l'extrémité avant du coussin principal, et qui est susceptible d'occuper deux positions par rapport au coussin principal, une position dite adulte, dans laquelle la longueur d'assise est maximale et dans laquelle la surface d'assise est composée du coussin principal et du nez d'assise, et une position dite enfant dans laquelle la longueur d'assise est minimale, **caractérisé en ce qu'**en position dite enfant la longueur d'assise minimale est égale à la longueur du coussin principal et la surface d'assise est formée uniquement par le coussin principal.

2. Siège de véhicule selon la revendication 1, **caractérisé en ce que** le nez est détachable du coussin principal.

3. Siège de véhicule selon la revendication 1 **caractérisé en ce que** le nez est monté basculant vers l'avant au moyen d'une charnière souple en tissu située sur la partie inférieure de la face interne du nez et de la face délimitant l'extrémité avant du coussin.

4. Siège de véhicule selon la revendication 1, **caractérisé en ce que** le nez est un élément gonflable.

5. Siège de véhicule selon les revendications 1 à 3, **caractérisé en ce que** la face interne du nez d'assise et la face délimitant l'extrémité avant du coussin sont inclinées vers l'avant.

6. Siège selon la revendication 1 ou 2, **caractérisé en ce que** le nez d'assise est attaché au coussin au moyen d'une fermeture éclair placée le long au moins un segment du périmètre délimitant la face interne du nez et de la face délimitant l'extrémité avant du coussin.

7. Siège selon la revendication 1 et 2, **caractérisé en ce que** le nez d'assise est maintenu adjacent au coussin principal, au moyen d'une enveloppe élastique fixée à l'extrémité du coussin dans laquelle le nez est inséré transversalement.

8. Siège selon l'une des revendications précédentes, **caractérisé en ce que** le coussin principal comporte un coffre qui débouche dans la face délimitant l'extrémité avant du coussin.

## Claims

1. Motor vehicle seat comprising a backrest and a seat squab having a main cushion and a complementary cushion, known as the seat squab nose, which is located at the front end of the main cushion and which is able to occupy two positions with respect to the main cushion, a position known as the adult position, in which the seat squab length is at a maximum and in which the seat squab surface is made up of the main cushion and the seat squab nose, and a position known as the child position, in which the seat squab length is at a minimum, **characterized in that**, in the position known as the child position, the minimum seat squab length is equal to the length of the main cushion and the seat squab surface is formed only by the main cushion.

2. Vehicle seat according to Claim 1, **characterized in that** the nose can be detached from the main cushion.

3. Vehicle seat according to Claim 1, **characterized in that** the nose is mounted such that it can tip forwards by means of a flexible fabric hinge located on the lower part of the inner face of the nose and of the face delimiting the front end of the cushion.

4. Vehicle seat according to Claim 1, **characterized in that** the nose is an inflatable element.

5. Vehicle seat according to Claims 1 to 3, **characterized in that** the inner face of the seat squab nose and the face delimiting the front end of the cushion are inclined towards the front.

6. Seat according to Claim 1 or 2, **characterized in that** the seat squab nose is attached to the cushion by means of a zip fastener positioned along at least one segment of the perimeter delimiting the inner face of the nose and of the face delimiting the front end of the cushion.

7. Seat according to Claims 1 and 2, **characterized in that** the seat squab nose is held next to the main cushion by means of an elastic sleeve fixed to the end of the cushion, into which the nose is inserted transversely.

8. Seat according to one of the preceding claims, **characterized in that** the main cushion has a compartment which opens into the face delimiting the front end of the cushion.

## Patentansprüche

1. Kraftfahrzeugsitz, mit einer Rückenlehne und einer Sitzfläche, die ein Hauptkissen und eine Sitzflächennase genanntes zusätzliches Kissen aufweist, das sich am vorderen Ende des Hauptkissens befindet und in Bezug auf das Hauptkissen zwei Positionen einnehmen kann, eine so genannte Erwachsenenposition, in der die Sitzflächenlänge maximal ist und in der die Sitzflächenoberfläche aus dem Hauptkissen und der Sitzflächennase gebildet ist, und eine so genannte Kinderposition, in der die Sitzflächenlänge minimal ist, **dadurch gekennzeichnet, dass** in der so genannten Kinderposition die minimale Sitzflächenlänge gleich der Länge des Hauptkissens ist und die Sitzflächenoberfläche ausschließlich durch das Hauptkissen gebildet ist.

2. Fahrzeugsitz nach Anspruch 1, **dadurch gekennzeichnet, dass** die Nase von dem Hauptkissen abnehmbar ist.

3. Fahrzeugsitz nach Anspruch 1, **dadurch gekennzeichnet, dass** die Nase mittels eines elastischen Gewebegelenks, das sich im unteren Teil der Innenfläche der Nase und der das vordere Ende des Kissens begrenzenden Fläche befindet, nach vorn schwenkbar montiert ist.

4. Fahrzeugsitz nach Anspruch 1, **dadurch gekennzeichnet, dass** die Nase ein aufblasbares Element ist.

5. Fahrzeugsitz nach dem Ansprüchen 1 bis 3, **dadurch gekennzeichnet, dass** die Innenfläche der Sitzflächennase und die das vordere Ende des Kissens begrenzende Fläche nach vorn geneigt sind.

6. Sitz nach Anspruch 1 oder 2, **dadurch gekennzeichnet, dass** die Sitzflächennase an dem Kissen mittels eines Reißverschlusses, der wenigstens längs eines Segments des die Innenfläche der Nase begrenzenden Umfangs und der das vordere Ende des Kissens begrenzenden Fläche angeordnet ist, befestigt ist.

7. Sitz nach Anspruch 1 und 2, **dadurch gekennzeichnet, dass** die Sitzflächennase benachbart zu dem Hauptkissen mittels einer elastischen Hülle gehalten wird, die an dem Ende des Kissens befestigt ist, in das die Nase transversal eingesetzt ist.

8. Sitz nach einem der vorhergehenden Ansprüche, **dadurch gekennzeichnet, dass** das Hauptkissen ein Fach aufweist, das in die das vordere Ende des Kissens begrenzende Fläche mündet.
